# EUROPEAN PATENT SPECIFICATION

(11) **EP 3 643 526 B1**
(45) Date of publication and mention of the grant of the patent: **30.11.2022**
(21) Application number: 18821188.2
(22) Date of filing: 20.02.2018
(51) Int. Cl.: B60C 11/12, B60C 5/00, B60C 11/03, B60C 11/00, B60C 11/13

(54) **TIRE**
REIFEN
PNEUMATIQUE

(30) Priority: 19.06.2017 JP 2017120006
(43) Date of publication of application: 29.04.2020
(73) Proprietor: Bridgestone Corporation, Tokyo 104-8340 (JP)
(72) Inventor: TANIGUCHI Hisashi, Tokyo 104-8340 (JP)
(74) Representative: Marks & Clerk LLP
(86) International application number: PCT/JP2018/005997
(87) International publication number: WO 2018/235335

(56) References cited:
- EP-A2- 2 537 688
- WO-A1-2016/125814
- JP-A- S60 252 005
- JP-A- 2012 017 001
- JP-A- 2012 017 001
- JP-A- 2013 133 082
- JP-A- 2014 180 948
- JP-A- 2015 134 580
- JP-A- 2017 052 402

## Description

### TECHNICAL FIELD

This invention relates to a tire.

This application is based upon and claiming the benefit of priority from Japanese Patent Application No. 2017-120006, filed in Japan on June 19, 2017.

### BACKGROUND

Heretofore, what is described in the following patent literature 1 has been known as a pneumatic tire having an improved steering stability. In this tire, a middle rib does not comprise any lug grooves, and includes an outer middle sipe extending inwardly from a shoulder main groove in a tire axial direction, and an inner middle sipe extending outwardly from a crown main groove in the tire axial direction.

### CITATION LIST

### Patent Literature

PTL 1: Japanese Patent Laid-Open No. 2015-209189

### SUMMARY

### (Technical Problem)

However, when a middle rib of a tread just includes an inner middle sipe extending inwardly from a shoulder main groove in a tire axial direction, and an outer middle sipe extending outwardly from a crown main groove in the tire axial direction as in a tire described in Patent Literature 1, there is a problem that a desired performance cannot be sufficiently exerted especially in a high speed cornering situation.

To solve the problem, it is an object of the present invention to provide a tire having an improved turning performance during running at high speeds.

### (Solution to Problem)

The invention provides a tire according to claim 1.

Here, in the present description, "the tread surface" indicates an outer peripheral surface over an entire circumference of the tire which comes in contact with a road surface, when the tire is rolled in a state where the tire is attached to a rim and charged with a predetermined internal pressure and a maximum load (hereinafter referred to as "a maximum load condition"), and "the tread edge" indicates an edge of the tread surface in the tire width direction.

Furthermore, in the present description, "a reference state" indicates a state where the tire is attached to the rim, and charged with the predetermined internal pressure and no load.

The above "rim" indicates an approved rim in an applicable size (a measuring rim in Standards Manual of ETRTO, and a design rim in Year Book of TRA) described or to be described in future in an industrial standard effective in a district where the tire is produced and used, for example, JATMA Year Book of JATMA (the Japan Automobile Tyre Manufacturers Association) in Japan, Standards Manual of ETRTO (the European Tyre and Rim Technical Organization) in Europe, or Year Book of TRA (the Tire and Rim Association, Inc.) in U.S. That is, the above rim also includes a size that can be included in the above industrial standard in future, in addition to the existing size. Examples of "the size to be described in future" include sizes described as "future developments" in 2013 edition of Standards Manual of ETRTO. However, it is considered that a rim having a size that is not described in the above industrial standard is a rim having a width corresponding to a bead width of the tire.

Additionally, the above "predetermined internal pressure" indicates an air pressure (a maximum air pressure) corresponding to a maximum load capability of a single wheel in an applicable size and ply rating described in the above JATMA Year Book or the like. It is considered that a pressure having a size that is not described in the above industrial standard is an air pressure (the maximum air pressure) corresponding to the maximum load capability prescribed for each vehicle to which the tire is installed. Note that air described herein can be replaced with an inert gas such as a nitrogen gas or the like.

It is further considered that the above "maximum load" is a load corresponding to the above maximum load capability.

In the present description, "the sipe" is a narrow groove that does not always open as in a usual groove, and has a width (the sipe width) of 0.5 mm or less to such an extent that at least a part of the groove closes in a case where the tire is rolled in a maximum load condition. Here, "the sipe width" indicates the shortest distance between opposite sipe wall surfaces which is measured vertically to an extending direction of the sipe in tread surface view (hereinafter referred to simply as "the extending direction") (i.e., in a cross section vertical to the extending direction of the sipe), and the sipe width indicates a maximum value in a case where the shortest distance varies in the extending direction of the sipe.

In the present description, "the vehicle-installed inside" indicates a side that is a vehicle side in the tire width direction in a case where the tire having a designated installing direction to a vehicle is installed to the vehicle, and "the vehicle-installed outside" indicates a side opposite to the vehicle-installed inside in the tire width direction.

In the present description, "an angle of the sipe to the tire circumferential direction" indicates an angle on an acute angle side, the angle being formed by the sipe and a virtual line extending along the tire circumferential direction in the tread surface view.

Furthermore, in the present description, it is considered that a size or the like of each element of the sipe or the like is measured in a reference state unless otherwise mentioned (the size or the like of each element in the tread surface view is measured in developed view of the tread surface in the reference state).

### (Advantageous Effect)

According to the present invention, there can be provided a tire having an improved turning performance during running at high speeds.

### BRIEF DESCRIPTION OF THE DRAWINGS

In the accompanying drawings:
FIG. 1 is a partially developed view illustrating a tread surface of a tire according to one embodiment of the present disclosure;
FIG. 2 is an enlarged view of a main part of FIG. 1;
FIG. 3 is a cross-sectional view taken along the line A-A of FIG. 2; and
FIG. 4 is a cross-sectional view taken along the line B-B of FIG. 2.

### DETAILED DESCRIPTION

Hereinafter, an embodiment of a tire of the present invention will be illustrated and described in detail with reference to the drawings.

Note that although not illustrated in the drawings, the present invention is applicable, for example, to a pneumatic tire comprising a usual tire structure including a carcass in which sidewall portions extending outwardly from a pair of bead portions in a tire radial direction are continuous with a tread portion that straddles across both the sidewall portions, and which comprises a ply of organic fiber cords or steel cords extending from one of the bead portions through the tread portion to the other bead portion; and a belt comprising a steel cord layer disposed between the carcass and a tread rubber.

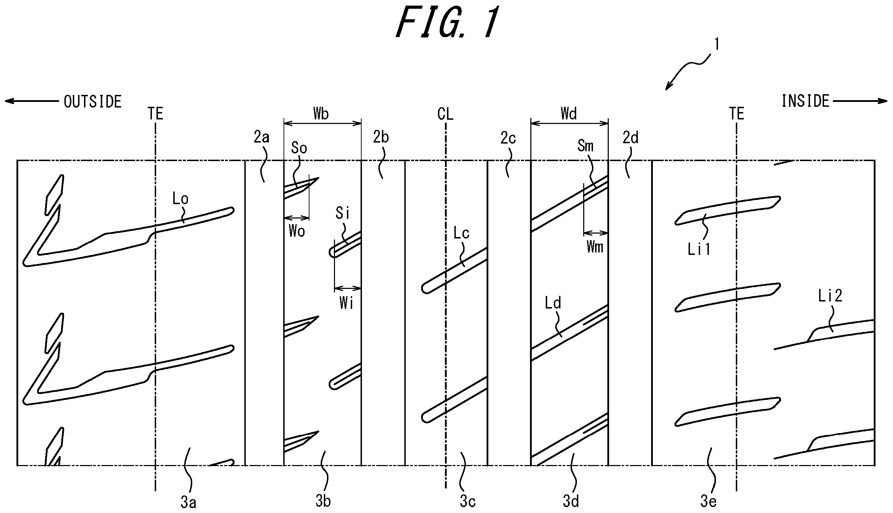

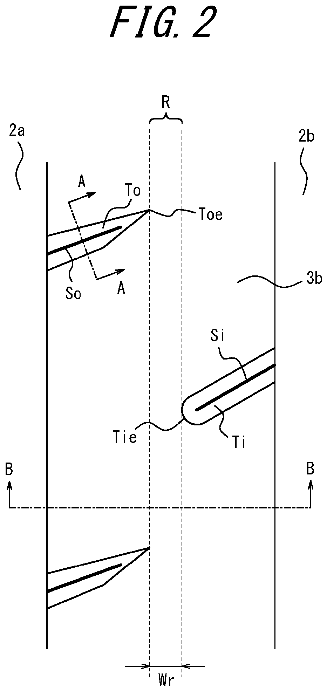

FIG. 1 is a partially developed view illustrating a tread of a tire according to one embodiment of the present invention, and FIG. 2 illustrates an enlarged view of a main part of the tread.

The tire of the present embodiment includes, in a tread surface 1, a plurality of (in the present embodiment, five) land portions 3a to 3d divided by a plurality of (in the present embodiment, four) circumferential grooves 2a to 2d and tread edges TE extending along a tire circumferential direction (i.e., at an angle of 0° to the tire circumferential direction). More specifically, as illustrated in FIG. 1, the tire of the present embodiment has the tread surface 1 divided into five land portions, that is, the first shoulder land portion 3a, the first intermediate land portion 3b, the second intermediate land portion 3c, the third intermediate land portion 3d and the second shoulder land portion 3e in order from a vehicle-installed outside (a left side of a paper surface in FIG. 1) by the four circumferential grooves 2a, 2b, 2c, and 2d and the tread edge TE, having mutually equal widths in an illustrated example. Here, in the illustrated example, the first intermediate land portion 3b, the second intermediate land portion 3c and the third intermediate land portion 3d have a mutually equal width.

In the tire of the illustrated example, five land portions are formed via four circumferential grooves as boundaries, but two or three or five or more (e.g., five) circumferential grooves may be formed. However, from a viewpoint of, for example, balance of rigidity of the land portion in the tread surface, three to five circumferential grooves (four to six land portions) are preferable, and four circumferential grooves (five land portions) are especially preferable as in the present example.

Note that the tire of the present embodiment is a tire in which an installing direction to the vehicle is determined to exert a desired performance, and the installing direction to the vehicle is designated.

Furthermore, the tire of the present embodiment is a pneumatic radial tire for a passenger vehicle, and the present invention is also applicable, for example, to a tire for a truck or a bus other than the passenger vehicle.

The first shoulder land portion 3a divided by the tread edge TE of the vehicle-installed outside and the circumferential groove 2a of the most vehicle-installed outside is formed as a rib-like land portion extending continuously in the tire circumferential direction. The first shoulder land portion 3a includes a groove Lo extending in a tire width direction. The groove Lo has an inner end in the tire width direction, which does not communicate with the circumferential groove 2a and terminates in the first shoulder land portion 3a. The groove Lo has an outer end in the tire width direction, which extends beyond the tread edge TE and terminates in the land portion on an outer side of the tread edge TE in the tire width direction. Furthermore, as illustrated in FIG. 1, it is preferable that the groove Lo communicates with a groove extending in the tire circumferential direction at an outer end in the tire width direction, and is formed as an almost L-shaped groove as a whole.

The first intermediate land portion 3b of the most vehicle-installed outside among the first to third intermediate land portions 3b to 3d divided only by the plurality of circumferential grooves 2a to 2d includes a first sipe So and a second sipe Si extending in the tire width direction. As illustrated in FIG. 1 and FIG. 2, the first sipe So communicates with the circumferential groove 2a adjacent to the vehicle-installed outside of the first intermediate land portion 3b, and terminates in the first intermediate land portion 3b. Furthermore, the second sipe Si communicates with the circumferential groove 2b adjacent to a vehicle-installed inside of the first intermediate land portion 3b, and terminates in the first intermediate land portion 3b.

The first sipes So and the second sipes Si are present alternately (in a staggered manner) in the tire circumferential direction. That is, the adjacent second sipe Si is disposed at a position away to one side in the tire circumferential direction on the vehicle-installed inside relative to one first sipe So located on the vehicle-installed outside in the first intermediate land portion 3b, and another adjacent first sipe So is disposed at a position away to one side in the tire circumferential direction on the vehicle-installed outside relative to the second sipe Si. Such arrangement is formed continuously in the tire circumferential direction.

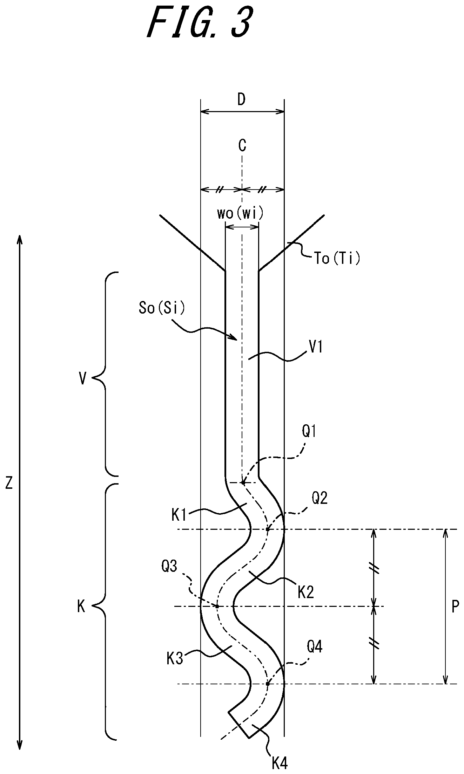

A sipe width wo (see FIG. 3) of the first sipe So is larger than a sipe width wi (see FIG. 3) of the second sipe Si (wo > wi).

Next, description will be made as to operations and effects of the tire of the present embodiment.

When a load is applied to the tread surface of the tire in a high-speed cornering situation, a large load is applied especially to the land portion of the vehicle-installed outside in the tire on an outer side in the cornering situation. At this time, if compression rigidity of the land portion is excessively large, slip is generated between the tread surface of the land portion and a road surface to impair steering stability. To solve this problem, the sipe is provided in the land portion to decrease the compression rigidity, so that the generation of the slip can be inhibited. However, when the sipe is just provided, shearing rigidity of the land portion decreases due to the provided sipe, and there is still the problem that a turning performance lowers.

On the other hand, as described above, in the tire of the present embodiment, the first intermediate land portion 3b includes the first sipes So and the second sipes Si that communicate with the adjacent circumferential grooves and terminate in the land portion, and the first sipes So and the second sipes Si are alternately present in the tire circumferential direction. Furthermore, the sipe width wo of the first sipe So is set to be larger than the sipe width wi of the second sipe Si. According to such a configuration, in the present embodiment, on the vehicle-installed outside of the first intermediate land portion 3b to which the large load is applied in the high-speed cornering situation, a land portion of the first intermediate land portion 3b can be bulged in the first sipe So having a large sipe width, to decrease the compression rigidity of the first intermediate land portion 3b, so that the generation of the slip can be inhibited. On the other hand, on the vehicle-installed inside of the first intermediate land portion 3b, the second sipe Si is disposed to the first sipe So in the staggered manner to avoid generation of an excessive difference in rigidity between the land portions in the tire circumferential direction. Consequently, the land portion component of the first intermediate land portion 3b is deformed in a direction to expand the second sipe Si due to the load. However, in the present embodiment, the sipe width wi of the second sipe Si is set to be smaller than the sipe width wo of the first sipe So, and hence, decrease in the shearing rigidity of the first intermediate land portion 3b on the vehicle-installed inside due to width enlargement deformation of the second sipe Si can be inhibited. As described above, according to the tire of the present embodiment, the shearing rigidity can be maintained while decreasing the compression rigidity of the first intermediate land portion to which the large load is applied in the high-speed cornering situation, and additionally, the turning performance during running at high speeds can improve.

Note that in a configuration where at least one of the first sipe So and the second sipe Si is replaced with a groove having a larger width and extending in the tire width direction, groove walls do not come in contact with each other (do not support each other) against shearing deformation. Consequently, the shearing rigidity decreases, and the high-speed turning performance is impaired.

Furthermore, in a case where at least one of the first sipe So and the second sipe Si is replaced with a configuration where both ends in an extending direction communicate with the adjacent circumferential grooves or a configuration where both the ends in the extending direction terminate in the land portion, the shearing rigidity decreases, or the compression rigidity increases, thereby impairing the high-speed turning performance.

A ratio (Wo/Wb) of a tire widthwise length Wo (see FIG. 1) of the first sipe So (an extending length in the tire width direction in tread surface view (i.e., in FIG. 1), and this also applies hereinafter) to a tire widthwise length Wb (see FIG. 1) of the first intermediate land portion 3b is preferably from 0.25 to 0.35 and more preferably from 0.30 to 0.35. According to such a configuration, the decrease in the shearing rigidity can be further inhibited while sufficiently decreasing the compression rigidity.

Furthermore, the sipe width wo (see FIG. 3) of the first sipe So is preferably from 0.2 mm to 0.8 mm and more preferably from 0.3 mm to 0.45 mm. According to this configuration, the decrease in the shearing rigidity can be further inhibited while sufficiently decreasing the compression rigidity.

A ratio (Wi/Wb) of a tire widthwise length Wi (see FIG. 1) of the second sipe Si to the tire widthwise length Wb of the first intermediate land portion 3b is preferably from 0.25 to 0.35 and more preferably from 0.30 to 0.35. According to such a configuration, the decrease in the shearing rigidity can be further inhibited while more sufficiently decreasing the compression rigidity.

Furthermore, the sipe width wi (see FIG. 3) of the second sipe Si is preferably from 0.2 mm to 0.8 mm and more preferably from 0.25 mm to 0.35 mm. According to this configuration, the decrease in the shearing rigidity can be further inhibited while more sufficiently decreasing the compression rigidity.

In the present embodiment, an angle of the first sipe So to the tire circumferential direction is larger than an angle of the second sipe Si to the tire circumferential direction.

The above angle of the first sipe So is set to be larger than the above angle of the second sipe Si. Consequently, on the vehicle-installed outside of the first intermediate land portion 3b having a more noticeably deformed land portion, compression deformation of the land portion can be facilitated, and the compression rigidity can be further decreased. Furthermore, the first sipe So and the second sipe Si have different angles to the tire circumferential direction, so that the shearing rigidity of the first intermediate land portion 3b in the tire width direction can increase. Consequently, the turning performance during the running at the high speeds can further improve.

It is preferable that the angle of the first sipe So to the tire circumferential direction is larger than the angle of the second sipe Si to the tire circumferential direction as in the present embodiment, but the angle of the first sipe So may be the same as the angle of the second sipe Si, and the angle of the first sipe So may be smaller than the angle of the second sipe Si.

The angle of the first sipe So to the tire circumferential direction is preferably from 60° to 80° and more preferably from 65° to 70°. According to this configuration, the decrease in the shearing rigidity can be further inhibited while more sufficiently decreasing the compression rigidity.

The angle of the second sipe Si to the tire circumferential direction is preferably from 50° to 70° and more preferably from 55° to 65°. According to this configuration, the decrease in the shearing rigidity can be further inhibited while more sufficiently decreasing the compression rigidity.

In the present embodiment, each of the first sipe So and the second sipe Si has a bent portion in a cross section vertical to an extending direction of the sipes. Each of the first sipe So and the second sipe Si has the bent portion, so that the decrease in the shearing rigidity of the first intermediate land portion 3b can be further inhibited. Furthermore, the sipe has the bent portion, so that a distance between sipe wall surfaces in a plane parallel to the tread surface can be increased. Therefore, compression deformation of a land portion of the first intermediate land portion 3b via the first sipe So can be especially further facilitated, and hence, the turning performance during the running at the high speeds can further improve.

FIG. 3 illustrates a preferable example of a sipe shape including the above bent portion in the cross section vertical to the extending direction of the sipe. FIG. 3 is a cross-sectional view taken along the A-A line of FIG. 2.

Note that FIG. 3 is a cross-sectional view taken along the A-A line of FIG. 2, and illustrates a cross-sectional shape of the first sipe So (and an after-mentioned first chamfered portion To). For convenience of description, to clearly illustrate a sipe width wi and an after-mentioned second chamfered portion Ti in an example of the second sipe Si having a configuration similar to the first sipe So of the present example, FIG. 3 illustrates reference signs inserted within parentheses, e.g., "(Si)", "(wi)" and "(Ti)". However, as described above, the sipe width wo of the first sipe So and the sipe width wi of the second sipe Si are not equal (wo > wi). Furthermore, FIG. 3 omits depiction of the tread surface 1.

As illustrated in FIG. 3, in the present embodiment, the first sipe So comprises a vertical portion V and an amplitude portion K that is continuous with a sipe bottom side of the vertical portion V. The vertical portion V and the amplitude portion K are formed by both sipe wall surfaces that face each other via a center line C of the sipe width wo of the first sipe So in a cross section of FIG. 3.

More specifically, the vertical portion V only comprises a first vertical portion V1 linearly formed from an opening end of the first sipe So on a tread surface 1 side toward the sipe bottom side along a normal line direction (a Z-direction illustrated in FIG. 3) of the tread surface 1. Furthermore, the amplitude portion K comprises a first inclined portion K1, a second inclined portion K2, a third inclined portion K3 and a fourth inclined portion K4 formed continuously in order with the sipe bottom side of the first vertical portion V1 and inclined to the normal line direction of the tread surface 1.

The first inclined portion K1 is formed as a portion inclined to one side to the normal line direction of the tread surface 1 via a first bent portion Q1 from the first vertical portion V1 (a portion inclined toward a lower right side of the paper surface in FIG. 3).

Subsequently, the second inclined portion K2 is formed as a portion inclined to another side opposite to the one side to the normal line direction of the tread surface 1 via a second bent portion Q2 from the first inclined portion K1 (a portion inclined toward a lower left side of the paper surface in FIG. 3).

Subsequently, the third inclined portion K3 is formed as a portion inclined to the one side to the normal line direction of the tread surface 1 via a third bent portion Q3 from the second inclined portion K2 (a portion inclined toward a lower right side of the paper surface in FIG. 3).

Furthermore, the fourth inclined portion K4 is formed as a portion inclined to the other side to the normal line direction of the tread surface 1 via a fourth bent portion Q4 from the third inclined portion K3 (a portion inclined toward a lower left side of the paper surface in FIG. 3).

In the present example, a distance between the second bent portion Q2 and the third bent portion Q3 in the normal line direction of the tread surface 1 is equal to a distance between the third bent portion Q3 and the fourth bent portion Q4 similarly in the normal line direction of the tread surface 1.

It is preferable that a ratio (P/D) of a distance P between the second bent portion Q2 and the fourth bent portion Q4 in the normal line direction of the tread surface 1 to an amplitude D of the amplitude portion K (see FIG. 3) is from 1.5 to 2.5. According to this configuration, the opposite sipe wall surfaces separated by the first sipe So come in contact with each other to sufficiently inhibit collapsing of the land portion, while room for the compression deformation of the land portion can be sufficiently produced.

In the present example, four bent portions Q1 to Q4 are formed in the first sipe So, but one to three or five or more (e.g., five) bent portions may be formed. However, from viewpoints of balance of rigidity of the land portion in the tread surface, productivity and the like, three to five bent portions are preferable, and four bent portions are especially preferable as in the present example.

Furthermore, in the present example, the bent portions Q1 to Q4 are curved and formed, but at least one of the portions may be angularly formed.

Additionally, the first sipe So does not include such bent portions as described above, and may be linearly formed along the normal line direction of the tread surface 1 or may be linearly inclined to the normal line direction from the sipe opening to the sipe bottom.

A cross-sectional shape of the first sipe So in the present embodiment and operations and effects by the shape described above with reference to FIG. 3 are basically similar also in the second sipe Si of the present embodiment, except that the sipe width wo of the first sipe So is larger than the sipe width wi of the second sipe Si.

However, the cross-sectional shape of the first sipe So may be different from the cross-sectional shape of the second sipe Si.

In the present embodiment, as illustrated in FIGS. 1 to 3, the first chamfered portion To having a width larger than a width of the first sipe So is provided between the opening end of the first sipe So on the tread surface 1 side and the tread surface 1. Furthermore, the width of the first chamfered portion To in the tread surface 1 is larger on the vehicle-installed outside than on the vehicle-installed inside (see FIGS. 1 and 2). That is, in the tread surface view, a distance between both edges of the first chamfered portion To in the tire circumferential direction, which is measured along the tire circumferential direction, gradually increases without decreasing (monotonously increases in the present example) as being from the vehicle-installed inside (a right side in FIGS. 1 and 2) of the first chamfered portion To toward the vehicle-installed outside (a left side in FIGS. 1 and 2). According to this configuration, the compression deformation of the first intermediate land portion 3b on the vehicle-installed outside can be facilitated, and the compression rigidity can be further decreased. The turning performance during the running at the high speeds can further improve.

However, the first sipe So may be directly open in the tread surface 1 while the first chamfered portion To is not provided. Alternatively, the width of the first chamfered portion To in the tread surface 1 does not have to be larger on the vehicle-installed outside than on the vehicle-installed inside.

Furthermore, in the present example, an extending direction terminating portion Toe of the first chamfered portion To in the tread surface 1 is angular in the tread surface view (see FIGS. 1 and 2), but the extending direction terminating portion Toe may comprise an arc (more specifically, a part of the arc) in the tread surface view.

In the present embodiment, as illustrated in FIGS. 1 to 3, the second chamfered portion Ti having a width larger than a width of the second sipe Si is also provided between an opening end of the second sipe Si on the tread surface 1 side and the tread surface 1. Furthermore, an extending direction terminating portion Tie of the second chamfered portion Ti in the tread surface 1 comprises an arc (more specifically, a part of the arc) in the tread surface view. The first intermediate land portion 3b is deformed in a direction to open the second sipe Si in the high-speed cornering situation, and hence, stress in a compressing direction locally concentrates on the extending direction terminating portion Tie of the second chamfered portion Ti. Thus, there is concern that cracks are generated from a starting point of the extending direction terminating portion Tie. However, according to the above configuration, the concentration of the stress can be prevented to inhibit the generation of the cracks. Additionally, durability of the tire can improve.

Furthermore, in the present example, a width of the second chamfered portion Ti in the tread surface 1 (a width in the tire circumferential direction) is almost constant from the vehicle-installed inside toward the vehicle-installed outside (see FIGS. 1 and 2), but the width does not have to be constant.

The extending direction terminating portion Tie of the second chamfered portion Ti comprises the arc in the tread surface view, and it is preferable that a radius of curvature of the arc is from 0.5 mm to 1.5 mm. According to this configuration, the concentration of the stress on the extending direction terminating portion Tie can be more effectively prevented, and the generation of the cracks can be further inhibited.

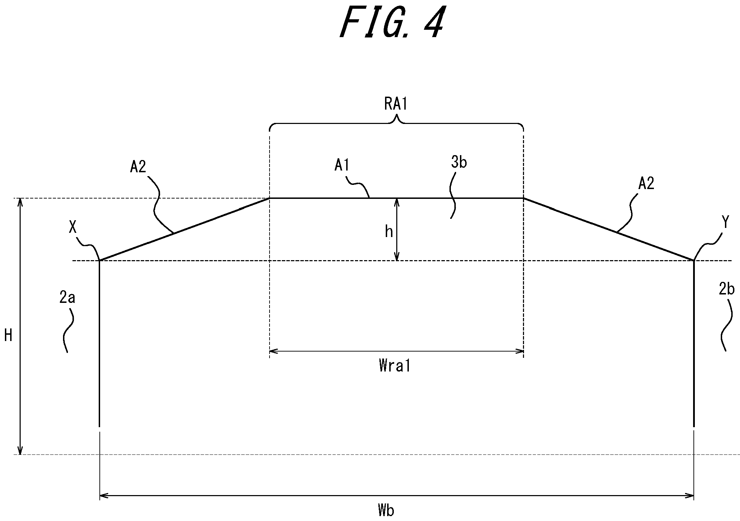

Next, FIG. 4 illustrates a cross-sectional view taken along the B-B line of FIG. 2.

As illustrated in FIG. 4, in the present embodiment, the first intermediate land portion 3b has an outline formed in a protruding shape that protrudes outwardly in the tire radial direction, in a tire widthwise cross section. Furthermore, the above outline comprises a first arc A1 (linearly illustrated for simplicity in FIG. 4) located at a center of the first intermediate land portion 3b in the tire width direction, and second arcs A2 (linearly illustrated for simplicity in FIG. 4) having a radius of curvature that is smaller than a radius of curvature of the first arc A1 and located at both ends of the first intermediate land portion 3b in the tire width direction (comprises only the first arc A1 and the second arcs A2 in the present example). Furthermore, a tire circumferential region RA1 (see FIG. 4) corresponding to the first arc A1 in the first intermediate land portion 3b includes a region R in which the first sipe So and the second sipe Si are not present and which is continuous in the tire circumferential direction (see FIG. 2). Note that in the present embodiment, the first chamfered portion To and the second chamfered portion Ti are provided between the first sipe So and the tread surface 1 and between the second sipe Si and the tread surface 1, respectively. Therefore, as described above, "the first sipe So" and "the second sipe Si" of the above "region R in which the first sipe So and the second sipe Si are not present and which is continuous in the tire circumferential direction" indicate the sipes including the first chamfered portion To and the second chamfered portion Ti. That is, the region R is a region in which the first sipe So, the first chamfered portion To, the second sipe Si and the second chamfered portion Ti are not present and which is continuous in the tire circumferential direction (see FIG. 2). Furthermore, "the region RA1 includes the region R" means that the regions match each other and that the region RA1 contains the whole region R (RA1 ⊇ R).

According to this configuration, a ground contact pressure of the region R of the first intermediate land portion 3b is set to be higher than that of another region of the first intermediate land portion 3b, and the ground contact pressure of the other region of the first intermediate land portion 3b can be decreased. Consequently, room for the compression deformation of the other region of the first intermediate land portion 3b is increased to decrease the compression rigidity, so that the generation of the slip is inhibited. Additionally, the turning performance during the running at the high speeds can further improve.

It is preferable that the radius of curvature of the first arc A1 is from 800 mm to 1200 mm, and it is also preferable that the radius of curvature of the second arc A2 is from 400 mm to 600 mm. According to this configuration, the ground contact pressure of the region R can be more effectively increased, and the compression rigidity of the other region of the first intermediate land portion 3b can be further decreased.

It is preferable that a ratio (Wr/Wb) of a tire widthwise length Wr of the region R to the tire widthwise length Wb of the first intermediate land portion 3b is from 0.1 to 0.3. According to this configuration, the ground contact pressure of the region R can be more effectively increased, and the compression rigidity of the other region of the first intermediate land portion 3b can be further decreased.

Note that in the present embodiment, the region RA1 completely includes the whole region R (RA1 ⊇ R), and a tire widthwise length Wral of the region RA1 is larger than the tire widthwise length Wr of the region R (Wral > Wr). However, the region RA1 may match the region R (RA1 = R), and the tire widthwise length Wral of the region RA1 may be equal to the tire widthwise length Wr of the region R (Wral = Wr). Furthermore, from a viewpoint of more effectively and locally increasing the ground contact pressure of the region R, it is especially preferable that the region RA1 matches the region R (RA1 = R, Wral = Wr).

In the present embodiment, a center of the region R in the tire width direction and a center of the region RA1 in the tire width direction match the center of the first intermediate land portion 3b in the tire width direction. More specifically, in a tire widthwise cross section illustrated in FIG. 4, the outline of the first intermediate land portion 3b has a symmetric shape to a center line (not illustrated) of the first intermediate land portion 3b in the tire width direction.

Note that in FIG. 4, the first arc A1 and the second arc A2 linearly drawn for convenience of drawing are continuous via an angular boundary portion, but in the present embodiment, the first arc A1 and the second arc A2 are actually smoothly continuous. It is preferable that the first arc A1 is smoothly continuous with the second arc A2.

In the tire widthwise cross section illustrated in FIG. 4, it is preferable that a ratio (h/H) of a distance h between a virtual straight line connecting a vehicle-installed outside end X and a vehicle-installed inside end Y in the first intermediate land portion 3b and a maximum diameter position of the region R to a height H of the maximum diameter position of the region R based on a minimum diameter position of a groove bottom of the circumferential groove 2a is from 0.1 to 0.2. According to this configuration, the ground contact pressure of the region R can be more effectively increased, and the compression rigidity of the other region of the first intermediate land portion 3b can be further decreased.

It is preferable that the outline of the first intermediate land portion 3b in the tire widthwise cross section comprises two types of arcs having different radii of curvatures as in the present embodiment, but the outline may comprise three or more types of arcs having mutually different radii of curvatures. However, the outline may only comprise, for example, one arc having a single radius of curvature.

As illustrated in FIG. 1, in the present embodiment, the second intermediate land portion 3c divided by the circumferential groove 2b and the circumferential groove 2c is formed as a rib-like land portion extending continuously in the tire circumferential direction. The second intermediate land portion 3c has a tire widthwise center located on a tire equator plane CL, and extends in the tire circumferential direction on the tire equator plane CL.

The second intermediate land portion 3c includes a shallow groove Lc extending in the tire width direction. The shallow groove Lc communicates with the circumferential groove 2c adjacent to the vehicle-installed inside of the second intermediate land portion 3c, and terminates in the second intermediate land portion 3c. A depth of the shallow groove Lc is smaller than that of each of the circumferential grooves 2a to 2d, the first sipe So and the second sipe Si. Thus, the shallow groove Lc is provided in the second intermediate land portion 3c, so that also in the second intermediate land portion 3c, compression rigidity is decreased, and decrease in shearing rigidity is inhibited. Consequently, the turning performance during the running at the high speeds can further improve.

A terminating portion of the shallow groove Lc that terminates in the second intermediate land portion 3c comprises an arc in the tread surface view (see FIG. 1). According to this configuration, concentration of stress on the terminating portion can be prevented, and the generation of the cracks can be inhibited.

As illustrated in FIG. 1, in the present embodiment, the third intermediate land portion 3d divided by the circumferential groove 2c and the circumferential groove 2d of a most vehicle-installed inside is formed as a block-shaped land portion separated in the tire circumferential direction by a shallow groove Ld.

The third intermediate land portion 3d includes the shallow groove Ld extending in the tire width direction as described above. The shallow groove Ld communicates with both the circumferential grooves 2c and 2d adjacent to the third intermediate land portion 3d. A depth of the shallow groove Ld is set to be smaller than a depth of each of the circumferential grooves 2a to 2d, the first sipe So and the second sipe Si. Thus, the shallow groove Ld is provided in the third intermediate land portion 3d, so that also in the third intermediate land portion 3d, the compression rigidity is decreased, and decrease in the shearing rigidity is inhibited. Consequently, the turning performance during the running at the high speeds can further improve, and a grounding property of the vehicle-installed inside in the tread surface 1 can improve, to enhance a ride comfort performance of the tire.

The shallow groove Ld includes a sipe Sm in a groove bottom. The sipe Sm communicates with the circumferential groove 2d, and terminates in the third intermediate land portion 3d in the tread surface view. According to this configuration, in the third intermediate land portion 3d, the compression rigidity is further decreased, and the decrease in the shearing rigidity is inhibited. Consequently, the turning performance during the running at the high speeds can further improve, and the grounding property of the vehicle-installed inside in the tread surface 1 can further improve, to further enhance the ride comfort performance of the tire.

It is preferable that a ratio (Wm/Wd) of a tire widthwise length Wm (see FIG. 1) of the sipe Sm to a tire widthwise length Wd of the third intermediate land portion 3d is from 0.25 to 0.4. According to such a configuration, in the third intermediate land portion 3d, the compression rigidity is further decreased, and the decrease in the shearing rigidity is inhibited. Consequently, the turning performance during the running at the high speeds can further improve, and the grounding property of the vehicle-installed inside in the tread surface 1 can improve, to further enhance the ride comfort performance of the tire.

It is preferable that a depth of each of the shallow grooves Lc and Ld is from 0.3 mm to 0.6 mm. According to this configuration, the decrease in the shearing rigidity can be further sufficiently inhibited while further decreasing the compression rigidity of each of the second intermediate land portion 3c and the third intermediate land portion 3d during running at high speeds.

As illustrated in FIG. 1, in the present embodiment, the second shoulder land portion 3e divided by the circumferential groove 2d of the most vehicle-installed inside and the tread edge TE of the vehicle-installed inside is formed as a rib-like land portion extending continuously in the tire circumferential direction. The second shoulder land portion 3e includes a groove Li1 extending in the tire width direction. An inner end of the groove Li1 in the tire width direction does not communicate with the circumferential groove 2d, and terminates in the second shoulder land portion 3e. An outer end of the groove Li1 in the tire width direction extends beyond the tread edge TE, and terminates in a land portion that is continuous with an outer side of the tread edge TE of the second shoulder land portion 3e. Furthermore, a groove Li2 extending in the tire width direction is formed in the land portion. An inner end of the groove Li2 in the tire width direction does not reach the tread edge TE. A sipe that does not reach the tread edge TE and extends in the tire width direction is formed continuously with the inner end of the groove Li2 in the tire width direction.

### EXAMPLES

Hereinafter, description will be made as to examples, but the present invention is not limited to the following examples.

Tires each having a size of 205/55R16 and basically following a tread pattern illustrated in FIG. 1 have specifications illustrated in Table 1.

Note that in all sample tires, a depth of each of a circumferential groove 2a and a circumferential groove 2d is 7.5 mm, a depth of each of a circumferential groove 2b and a circumferential groove 2c is 7.5 mm, a depth of each of a shallow groove Lc and a shallow groove Ld is 0.5 mm, and a depth of each of a first sipe So, a second sipe Si and a sipe Sm is 5.6 mm.

Furthermore, in all the sample tires, a sipe width of the first sipe So is 0.4 mm, and a sipe width of each of the second sipe Si and the sipe Sm is 0.3 mm.

Additionally, each of widths of a first chamfered portion To and a second chamfered portion Ti (widths in a tire circumferential direction) is 3.5 mm at maximum.

In Table 1, "first and second sipes are alternately present" means that the first sipes So and the second sipes Si are alternately present in the tire circumferential direction, and "width of first chamfered portion is large on outer side" means that a width of the first chamfered portion To in a tread surface is larger on a vehicle-installed outside than on a vehicle-installed inside. Furthermore, "end portion of second chamfered portion is arc" means that an extending direction terminating portion of the second chamfered portion Ti in the tread surface comprises an arc in tread surface view. Additionally, "Yes" means that the above configuration is provided, and "No" means that the above configuration is not provided.

Furthermore, in Table 1, "outer sipe angle" is an angle of the first sipe So to the tire circumferential direction, and "inner sipe angle" is an angle of the second sipe Si to the tire circumferential direction. Additionally, "number of bent portions" is the number of the bent portions in a cross section (the cross section illustrated in FIG. 3) of each of the first sipe So and the second sipe Si, and "none" means that any bent portions are not present in the first sipe So and the second sipe Si.

Each of the sample tires is attached to a rim having a size of 8J-18, charged with an internal pressure of 240 kPa, and then installed in a rear-wheel-drive vehicle having a displacement of 2000 cc. The vehicle runs at high speed along a test course, a dry road surface and a wet road surface in a state where one driver and one passenger are in the vehicle. Consequently, turning performance and drainage performance are evaluated. Specifically, evaluations are performed as follows.

### [Turning Performance Evaluation]

Sensory evaluation of the turning performance of each of the above sample tires during the running on the dry road surface is performed by the driver. Table 1 illustrates the result with a relative value in a case where an evaluation result of a tire of Comparative Example 1 is set to 100. A larger numeric value indicates that a tire has a more excellent turning performance.

### [Drainage Performance Evaluation]

Sensory evaluation of a running turning performance of each of the above sample tires during running on the wet road surface (a water depth of 1 mm) is performed by the driver. Table 1 illustrates the result with a relative value in a case where an evaluation result of the tire of Comparative Example 1 is set to 100. A larger numeric value indicates that a tire has a more excellent drainage performance.

**[Table 1]**

| | Comparative Example 1 | Comparative Example 2 | Example 1 | Example 2 | Example 3 | Example 4 |
|---|---|---|---|---|---|---|
| Sipe width [mm] of first sipe | 0.3 | 0.4 | 0.4 | 0.4 | 0.4 | 0.4 |
| Sipe width [mm] of second sipe | 0.3 | 0.3 | 0.3 | 0.3 | 0.3 | 0.3 |
| First and second sipes are alternately present | Yes | No | Yes | Yes | Yes | Yes |
| Outer sipe angle [°] | 68 | 68 | 68 | 60 | 68 | 68 |
| Inner sipe angle [°] | 60 | 60 | 60 | 60 | 60 | 60 |
| Number of bent portions | 4 | 4 | 4 | 4 | None | 4 |
| Width of first chamfered portion is large on outer side | Yes | Yes | Yes | Yes | Yes | Yes |
| End portion of second chamfered portion is arc | Yes | Yes | Yes | Yes | Yes | Yes |
| Radius [mm] of curvature of first arc [mm] | 1000 | 1000 | 1000 | 1000 | 1000 | 1000 |
| Radius [mm] of curvature of second arc [mm] | 1000 | 1000 | 500 | 500 | 500 | 1000 |
| Turning performance | 100 | 103 | 110 | 108 | 107 | 106 |
| Drainage performance | 100 | 100 | 110 | 110 | 110 | 100 |

It is seen from the results illustrated in Table 1 that each of tires according to Examples has an improved turning performance during running at high speeds as compared with tires according to Comparative Examples 1 and 2.

### INDUSTRIAL APPLICABILITY

A tire according to the present invention is usable in any type of tire such as a pneumatic radial tire for passenger vehicles.

### REFERENCE SIGNS LIST

- 1: tread surface
- 2a, 2b, 2c, and 2d: circumferential groove
- 3a: first shoulder land portion (a land portion)
- 3b: first intermediate land portion (an intermediate land portion)
- 3c: second intermediate land portion (an intermediate land portion)
- 3d: third intermediate land portion (an intermediate land portion)
- 3e: second shoulder land portion (a land portion)
- A1: first arc
- A2: second arc
- C: center line
- CL: tire equator plane
- K: amplitude portion
- K1: first inclined portion
- K2: second inclined portion
- K3: third inclined portion
- K4: fourth inclined portion
- Lc and Ld: shallow groove
- Lo, Li1 and Li2: groove
- Q1: first bent portion (a bent portion)
- Q2: second bent portion (a bent portion)
- Q3: third bent portion (a bent portion)
- Q4: fourth bent portion (a bent portion)
- R: region in which the first sipe and the second sipe are not present and which is continuous in a tire circumferential direction
- RA1: tire circumferential region corresponding to the first arc
- Si: second sipe
- So: first sipe
- Sm: sipe
- TE: tread edge
- Ti: second chamfered portion
- Tie: terminating portion of the second chamfered portion
- To: first chamfered portion
- Toe: terminating portion of the first chamfered portion
- V: vertical portion
- V1: first vertical portion
- wi: sipe width of the second sipe
- wo: sipe width of the first sipe

## Claims

1. A tire including, in a tread surface (1) of the tire, a plurality of land portions divided by a plurality of circumferential grooves (2a, 2b, 2c, 2d) and tread edges (TE) extending along a tire circumferential direction, wherein a first intermediate land portion (3b) of most vehicle-installed outside among intermediate land portions divided only by the plurality of circumferential grooves (2a, 2b, 2c, 2d) includes sipes (Sm) extending in a tire width direction,
the sipes (Sm) comprise a first sipe (So) that communicates with the circumferential groove (2a, 2b, 2c, 2d) adjacent to a vehicle-installed outside of the first intermediate land portion, and terminates in the first intermediate land portion, and a second sipe (Si) that communicates with the circumferential groove (2a, 2b, 2c, 2d) adjacent to a vehicle-installed inside of the first intermediate land portion, and terminates in the first intermediate land portion,
the first sipe (So) and the second sipe (Si) are alternately present in the tire circumferential direction, and
a sipe width of the first sipe (wo) is larger than a sipe width of the second sipe (wi), **characterized in that**
a second chamfered portion (Ti) having a width larger than a width of the second sipe (Si) is provided between an opening end of the second sipe (Si) on a tread surface side and the tread surface (1), and an extending direction terminating portion of the second chamfered portion (Tie) in the tread surface (1) comprises an arc in tread surface view.

2. The tire according to claim 1, wherein an angle of the first sipe (So) to the tire circumferential direction is larger than an angle of the second sipe (Si) to the tire circumferential direction.

3. The tire according to claim 1, wherein the first sipe (So) and the second sipe (Si) each has a bent portion (Q1, Q2, Q3, Q4) in a cross section vertical to an extending direction of the first sipe (So) and the second sipe (Si), respectively.

4. The tire according to claim 1, wherein a first chamfered portion (To) having a width larger than a width of the first sipe (So) is provided between an opening end of the first sipe (So) on a tread surface side and the tread surface (1), and the width of the first chamfered portion (To) in the tread surface (1) is larger on the vehicle-installed outside than on the vehicle-installed inside.

5. The tire according to claim 1, wherein the first intermediate land portion (3b) has an outline formed in a protruding shape that protrudes outwardly in a tire radial direction, in a tire widthwise cross section,
the outline includes at least a first arc (A1) located at a center of the first intermediate land portion (3b) in the tire width direction, and second arcs (A2) having a radius of curvature that is smaller than a radius of curvature of the first arc (A1) and located at both ends of the first intermediate land portion (3b) in the tire width direction, and
a tire circumferential region corresponding to the first arc (RA1) in the first intermediate land portion (3b) includes a region in which the first sipe (So) and the second sipe (Si) are not present and which is continuous in the tire circumferential direction.

## Patentansprüche

1. Reifen, der, in einer Lauffläche (1) des Reifens, eine Vielzahl von Stegabschnitten einschließt, die durch eine Vielzahl von umlaufenden Rillen (2a, 2b, 2c, 2d) und Laufflächenkanten (TE), die sich entlang einer Reifenumfangsrichtung erstrecken, unterteilt sind, wobei ein erster Zwischenstegabschnitt (3b) der am weitesten auf einer Fahrzeugeinbau-Außenseite unter Zwischenstegabschnitten, die nur durch die Vielzahl von umlaufenden Rillen (2a, 2b, 2c, 2d) unterteilt sind, Lamellen (Sm) einschließt, die sich in einer Reifenbreitenrichtung erstrecken,
wobei die Lamellen (Sm) eine erste Lamelle (So), die mit der umlaufenden Rille (2a, 2b, 2c, 2d) angrenzend an eine Fahrzeugeinbau-Außenseite des ersten Zwischenstegabschnitts in Verbindung steht und in dem ersten Zwischenstegabschnitt endet, und eine zweite Lamelle (Si), die mit der umlaufenden Rille (2a, 2b, 2c, 2d) angrenzend an eine Fahrzeugeinbau-Innenseite des ersten Zwischenstegabschnitts in Verbindung steht und in dem ersten Zwischenstegabschnitt endet, umfassen,
wobei die erste Lamelle (So) und die zweite Lamelle (Si) abwechselnd in der Reifenumfangsrichtung vorhanden sind, und
wobei eine Lamellenbreite der ersten Lamelle (wo) größer ist als eine Lamellenbreite der zweiten Lamelle (wi), **dadurch gekennzeichnet, dass**
ein zweiter abgeschrägter Abschnitt (Ti), der eine Breite, größer als eine Breite der zweiten Lamelle (Si), aufweist, zwischen einem Öffnungsende der zweiten Lamelle (Si) auf einer Laufflächenseite und der Lauffläche (1) bereitgestellt wird und ein Ausdehnungsrichtung-Abschlussabschnitt des zweiten abgeschrägten Abschnitts (Tie) in der Lauffläche (1) in einer Laufflächenansicht einen Bogen umfasst.

2. Reifen nach Anspruch 1, wobei ein Winkel der ersten Lamelle (So) zu der Reifenumfangsrichtung größer ist als ein Winkel der zweiten Lamelle (Si) zu der Reifenumfang srichtung.

3. Reifen nach Anspruch 1, wobei die erste Lamelle (So) und die zweite Lamelle (Si) jeweils einen gebogenen Abschnitt (Ql, Q2, Q3, Q4) in einem Querschnitt, senkrecht zu einer Ausdehnungsrichtung der ersten Lamelle (So) beziehungsweise der zweiten Lamelle (Si), aufweisen.

4. Reifen nach Anspruch 1, wobei ein erster abgeschrägter Abschnitt (To), der eine Breite, größer als eine Breite der ersten Lamelle (So), aufweist, zwischen einem Öffnungsende der ersten Lamelle (So) auf einer Laufflächenseite und der Lauffläche (1) bereitgestellt wird und die Breite des ersten abgeschrägten Abschnitts (To) in der Lauffläche (1) auf der Fahrzeugeinbau-Außenseite größer ist als auf der Fahrzeugeinbau-Innenseite.

5. Reifen nach Anspruch 1, wobei der erste Zwischenstegabschnitt (3b) einen in einer vorspringenden Gestalt geformten Umriss aufweist, der, in einem reifenbreitseitigen Querschnitt, in einer Reifenradialrichtung nach außen vorspringt,
wobei der Umriss mindestens einen ersten Bogen (A1), der an einer Mitte des ersten Zwischenstegabschnitts (3b) in der Reifenbreitenrichtung angeordnet ist, und zweite Bögen (A2), die einen Krümmungsradius aufweisen, der kleiner ist als ein Krümmungsradius des ersten Bogens (A1), und an beiden Enden des ersten Zwischenstegabschnitts (3b) in der Reifenbreitenrichtung angeordnet sind, einschließt, und
wobei ein Reifenumfangsbereich, der dem ersten Bogen (RA1) in dem ersten Zwischenstegabschnitt (3b) entspricht, einen Bereich einschließt, in dem die erste Lamelle (So) und die zweite Lamelle (Si) nicht vorhanden sind und der in der Reifenumfangsrichtung durchgehend ist.

## Revendications

1. Bandage pneumatique, incluant, dans une surface de bande de roulement (1) du bandage pneumatique, une pluralité de parties d'appui divisées par une pluralité de rainures circonférentielles (2a, 2b, 2c, 2d) et des bords de la bande de roulement (TE) s'étendant le long d'une direction circonférentielle du bandage pneumatique, dans lequel une première partie d'appui intermédiaire (3b) parmi des parties d'appui intermédiaires les plus externes, lors de l'installation sur le véhicule, divisées uniquement par la pluralité de rainures circonférentielles (2a, 2b, 2c, 2d), inclut des lamelles (Sm) s'étendant dans une direction de la largeur du bandage pneumatique,
les lamelles (Sm) comprennent une première lamelle (So) qui communique avec la rainure circonférentielle (2a, 2b, 2c, 2d) adjacente à un extérieur, lors de l'installation sur le véhicule, de la première partie d'appui intermédiaire, et se termine dans la première partie d'appui intermédiaire, et une deuxième lamelle (Si) qui communique avec la rainure circonférentielle (2a, 2b, 2c , 2d) adjacente à un intérieur, lors de l'installation sur le véhicule, de la première partie d'appui intermédiaire, et se termine dans la première partie d'appui intermédiaire,
la première lamelle (So) et la deuxième lamelle (Si) sont alternativement présentes dans la direction circonférentielle du bandage pneumatique, et
une largeur de lamelle de la première lamelle (wo) est supérieure à une largeur de lamelle de la deuxième lamelle (wi), **caractérisé en ce que** :
une deuxième partie chanfreinée (Ti) ayant une largeur supérieure à une largeur de la deuxième lamelle (Si) est fournie entre une extrémité d'ouverture de la deuxième lamelle (Si) sur un côté de la surface de bande de roulement et la surface de bande de roulement (1), et une partie de terminaison dans la direction d'extension de la deuxième partie chanfreinée (Tie) dans la surface de bande de roulement (1) comprend un arc dans une vue de la surface de bande de roulement.

2. Bandage pneumatique selon la revendication 1, dans lequel un angle de la première lamelle (So) par rapport à la direction circonférentielle du bandage pneumatique est supérieur à un angle de la deuxième lamelle (Si) par rapport à la direction circonférentielle du bandage pneumatique.

3. Bandage pneumatique selon la revendication 1, dans lequel la première lamelle (So) et la deuxième lamelle (Si) comportent chacune respectivement une partie courbée (Ql, Q2, Q3, Q4) dans une section transversale verticale à une direction d'extension de la première lamelle (So) et de la deuxième lamelle (Si).

4. Bandage pneumatique selon la revendication 1, dans lequel une première partie chanfreinée (To) ayant une largeur supérieure à une largeur de la première lamelle (So) est fournie entre une extrémité d'ouverture de la première lamelle (So) sur un côté de la bande de roulement et la surface de bande de roulement (1), et la largeur de la première partie chanfreinée (To) dans la surface de bande de roulement (1) est supérieure sur l'extérieur, lors de l'installation sur le véhicule, à celle sur l'intérieur, lors de l'installation sur le véhicule.

5. Bandage pneumatique selon la revendication 1, dans lequel la première partie d'appui intermédiaire (3b) a un contour formé en une forme en saillie qui fait saillie vers l'extérieur dans une direction radiale du bandage pneumatique, dans une section transversale dans le sens de la largeur du bandage pneumatique,
le contour inclut au moins un premier arc (A1) disposé au niveau d'un centre de la première partie d'appui intermédiaire (3b), dans la direction de la largeur du bandage pneumatique, et des deuxièmes arcs (A2) ayant un rayon de courbure inférieur à un rayon de courbure du premier arc (A1) et disposés au niveau des deux extrémités de la première partie d'appui intermédiaire (3b), dans la direction de la largeur du bandage pneumatique, et
une région circonférentielle du bandage pneumatique correspondant au premier arc (RA1) dans la première partie d'appui intermédiaire (3b) inclut une région dans laquelle la première lamelle (So) et la deuxième lamelle (Si) ne sont pas présentes et qui est continue dans la direction circonférentielle du bandage pneumatique.
